# EUROPEAN PATENT APPLICATION

(11) **EP 2 615 534 A1**
(43) Date of publication of application: **17.07.2013**
(21) Application number: 12193388.1
(22) Date of filing: 20.11.2012
(51) Int. Cl.: G06F 3/0481, G06F 3/0488

(54) **Electronic device and method of controlling the same**

(30) Priority: 16.01.2012 TW 101101546
(71) Applicant: Acer Incorporated, Taipei Hsien 221 (TW)
(72) Inventor: Ting, Kuei-Ping, 221 Taipei Hsien (TW); Yang, Chao-Kuang, 221 Taipei Hsien (TW)
(74) Representative: Becker Kurig Straus

(57) **Abstract**

Electronic device and method for controlling the same are provided. A first block and a second block are displayed on a touch screen of the electronic device. The first block is displayed on a lower portion on the display screen of the touch panel. The second block is displayed on an upper portion on the display screen of the touch panel. Contact movement between the first block and the second block on the display screen of the touch panel is detected. An arrangement line for arranging icons on the display screen is determined according to a moving path corresponding to the contact movement on the touch panel. Icons are arranged along the arrangement line on the display screen to generate a graphical user interface for the electronic device.

## Description

### CROSS REFERENCE TO RELATED APPLICATIONS

This Application claims priority of Taiwan Patent Application No. 101101546, filed on Jan. 16, 2012, the entirety of which is incorporated by reference herein.

### BACKGROUND OF THE INVENTION

### Field of the Invention

The disclosure relates generally to a user interface of electronic devices, and, more particularly to systems and methods that automatically determine an input habit and provide a corresponding user interface according to a movement on a touch-sensitive surface.

### Description of the Related Art

Recently, electronic devices, such as handheld devices, have become more and more technically advanced and multifunctional. For example, a handheld device may have e-mail message capabilities, an advanced address book management system, a media playback system, and various other functions. Due to increased convenience and functions of the devices, these devices have become necessities of life.

In a traditional handheld electronic device, functional icons are arranged on a user interface in a way that is defined by a manufacturer. A predefined, non-changeable user interface is provided, such that a user cannot rearrange the location of the functional icons. In other words, a set of fixed interfaces are provided for users for related operations, wherein individual input habits of users may not be represented when electronic devices are designed. Here, input habits are generalized. However, each user may have different input habits. For example, some users may be right handed, thus they may need to use their right hand to operate the interfaces. Some users may be left handed, thus they may need to use their left hand to operate the interfaces. Therefore, it may be inconvenient for users when their input habits are different from the generalized input habits considered for the set of fixed interfaces provided for operation.

Accordingly, there is a need for an electronic device, which provides a more user-friendly interface by automatically determining input habits of users and arranging the functional icons according to the determined input habits.

### BRIEF SUMMARY OF THE INVENTION

An electronic device and a method of controlling the same are provided.

An embodiment of a method of controlling an electronic device with a touch panel is provided. A first block and a second block are displayed on a display screen of the touch panel, wherein the first block is located on a lower portion on the display screen of the touch panel, and the second block is located on an upper portion on the display screen of the touch panel. A contact movement between the first block and the second block on the display screen of the touch panel is detected. An arrangement line for arranging icons on the display screen is determined according to a moving path corresponding to the contact movement on the touch panel. Icons are arranged along the arrangement line on the display screen, and the display screen with the icons arranged along the arrangement line is used as a graphical user interface for the electronic device.

An embodiment of an electronic device is provided. The electronic device comprises a touch panel and a controller. The touch panel provides a display screen, and displays a first block and a second block on the display screen, wherein the first block is located on a lower portion on the display screen of the touch panel, and the second block is located on an upper portion on the display screen of the touch panel. The controller detects and receives a contact movement between the first block and the second block on the display screen of the touch panel, determines an arrangement line for arranging icons on the display screen according to a moving path corresponding to the contact movement on the touch panel, arranges a plurality of icons along the arrangement line on the display screen, and presents the display screen with the icons arranged along the arrangement line as a graphical user interface for the electronic device.

In an embodiment, the second block is displayed as two sub-blocks on an upper-left corner and an upper-right corner of the display screen, respectively.

In an embodiment, the number and/or types of the icons are predetermined by a user.

In an embodiment, the icons are displayed starting from the middle of the arrangement line when arranging the icons along the arrangement line on the display screen.

In an embodiment, a plurality of curves are provided as candidates of the arrangement line, and one of the curves is selected as the arrangement line according to the moving path of the contact movement.

The aforementioned methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of an electronic device of the invention;

Fig. 2 is a flowchart of an embodiment of a method of controlling an electronic device of the invention; and

Figs. 3A-3F are schematic diagrams illustrating embodiments of screen displays.

### DETAILED DESCRIPTION OF THE INVENTION

Electronic device and method of controlling an electronic device are provided.

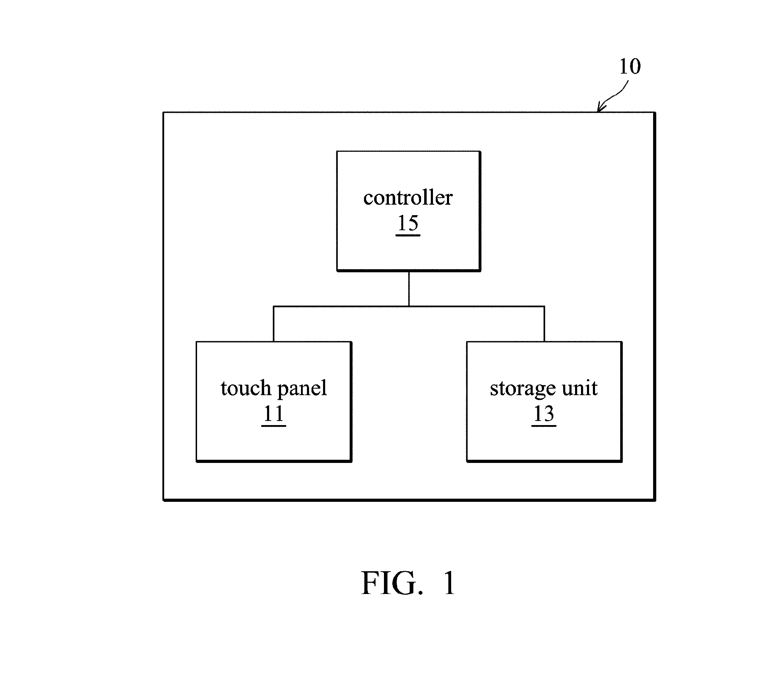

Fig. 1 is a schematic diagram illustrating an embodiment of an electronic device of the invention.

According to an embodiment, an electronic device 10 can be a computer system or a portable device, such as a PDA (Personal Digital Assistant), a mobile phone, a smart phone, and a mobile Internet device (MID).

The electronic device 10 comprises a touch panel 11, a storage unit 13, and a controller 15.

The touch panel 11 can be a touch screen, which is a display screen unit equipped with a touch sensor (not shown). The touch sensor forms a touch sensitive surface that detects contact and any movement or break of the contact. The touch panel 11 displays visual outputs, such as information, and/or graphs and interfaces, from the electronic device 10. The touch panel 11 accepts user inputs and transmits the inputs to a controller 15 for further processing.

The storage unit 13 stores various user information, settings, and program codes utilized in the electronic device 10.

The controller 15 performs the method of controlling an electronic device of the invention. Related details are discussed later.

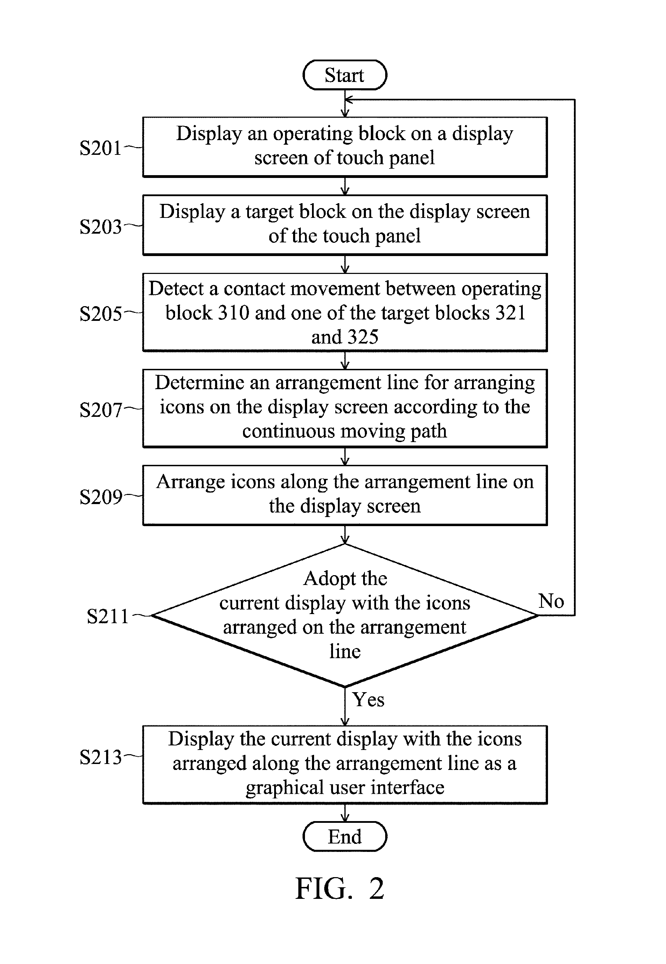

Fig. 2 is a flowchart of an embodiment of a method of controlling an electronic device of the invention. In an exemplary embodiment, a user can configure a layout for arranging the functional icons on a user interface of an electronic device. When the user uses the electronic device for the first time (or when the layout for arranging the functional icons is to be reset), visual cues are provided to help the user to perform a gesture to define (or to redefine) the layout for arranging the functional icons on the user interface. More specifically, the input habits (i.e., using the right-hand or left hand) for the particular user is determined according to the performed gesture. Accordingly, a user interface with functional icons arranged in a way that matches the input habits of users is provided. The method for controlling an electronic device can be used in a handheld device, such as a PDA (Personal Digital Assistant), a mobile phone, a smart phone, and a mobile Internet device (MID). In an exemplary embodiment, the electronic device is equipped with a touch panel, such as a touch screen.

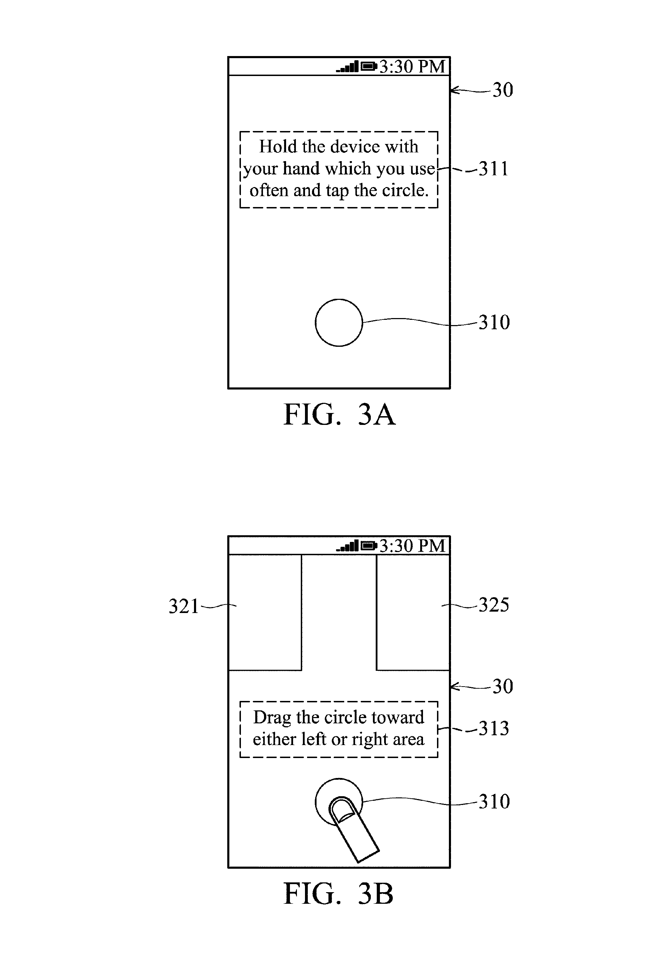

In step S201, an operating block (first block) is displayed on a display of the touch-sensitive display. Referring to Fig. 3A, an operating block 310 is displayed on a display 30 of the touch-sensitive display. In addition, a prompt 311 is displayed so that a user may make contact with the operating block 310 with his/her dominant hand (i.e., right hand or left hand) and dominant finger (such as thumb or the index finger).

In step S203, when a contact with the first block is detected, a target block (second block) is displayed on the display screen of the touch panel. For example, referring to Fig. 3B, when a user makes contact with the operating block 310, two target blocks 321 and 325 are displayed on upper portions of the display screen 30, and a prompt 313 is displayed so that a user may make contact with either of the target blocks 321 and 325.

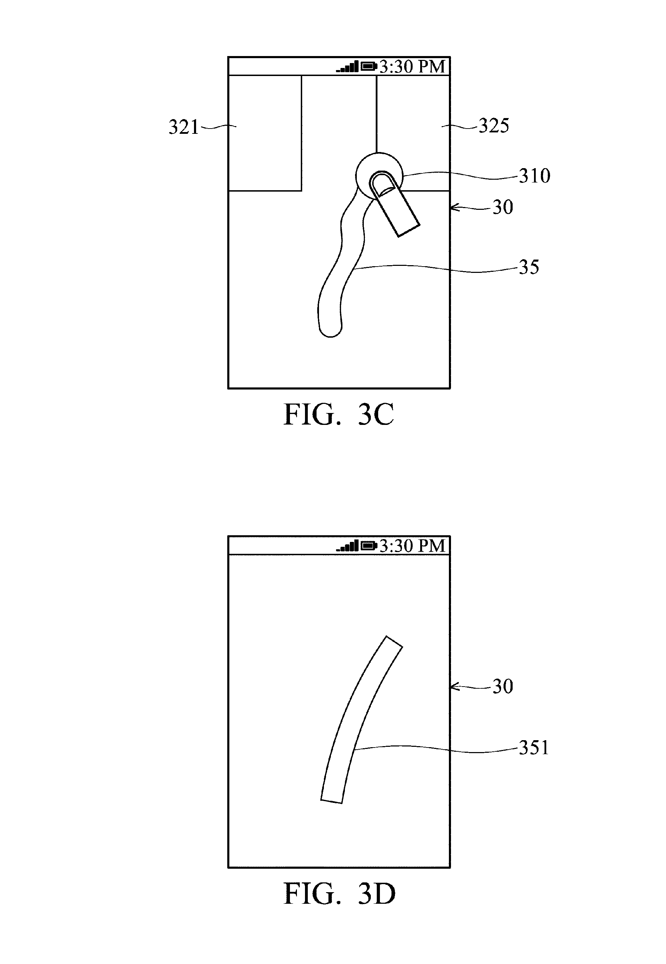

In step S205, a contact movement between the operating block 310 and one of the target blocks 321 and 325 on the display screen of the touch panel is detected. For example, in Fig. 3C, when the user drags the operating block 310 towards the target block 321 (or target block 325) and drops the operating block 310 on the target block 321 (or target block 325), a continuous moving path 35 corresponding to the contact is displayed on the display screen 30 according to the movement of the finger of the user.

In step S207, an arrangement line for arranging icons on the display screen is determined according to the continuous moving path corresponding to the contact movement on the touch panel. For example, in Fig. 3D, upon detecting of a breaking of the contact, the continuous moving path 35 generated by the movement of the point of contact is optimized to generate an arrangement line 351.

In the exemplary embodiment, an optimization process is performed on the continuous moving path 35 to generate a smooth arrangement line. It is understood that, the present invention is not limited to this. For example, a plurality of curves as candidates of the arrangement line can be provided in advance, and one of the plurality of curves may be selected as the arrangement line according to the continuous moving path of the contact movement.

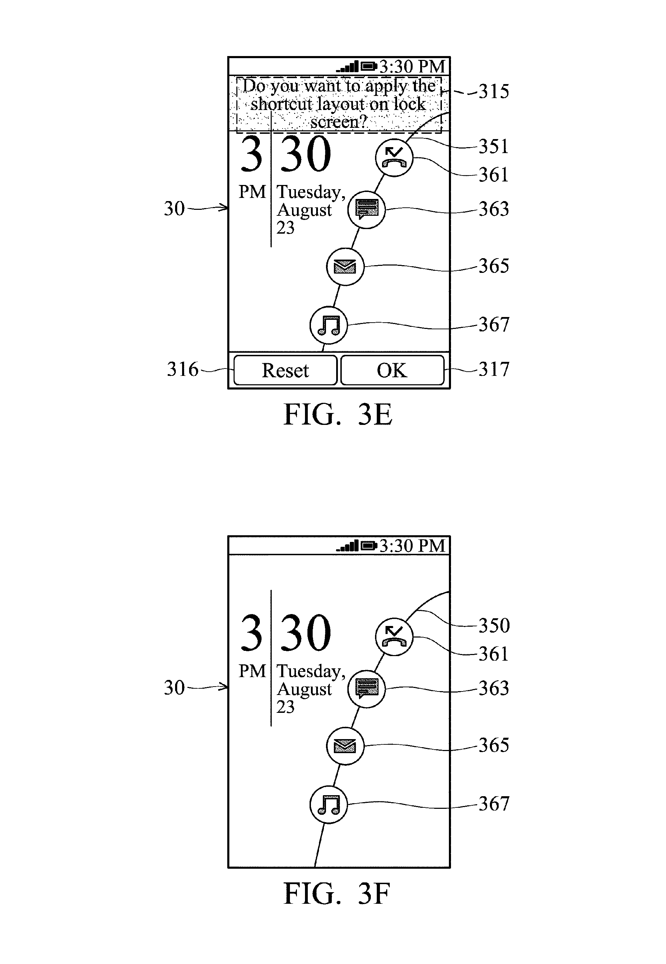

In step S209, icons are arranged along the arrangement line on the display screen. For example, in Fig. 3E, predetermined functional icons 361, 363, 365, 367 (such as functional icons of application programs that are frequently used) are arranged along the arrangement line 351 on the display screen 30.

In step S211, an instruction from a user is received, indicating whether the current display with the icons arranged on the arrangement line 351 is to be utilized as a user graphical interface. For example, in Fig. 3E, a prompt 315 is displayed so that the user may confirm whether the current display 30 with the icons arranged on the arrangement line 351 is to be utilized as a user graphical interface. If the user determines to utilize the icon arrangement on the current display 30, he/she may tap an 'OK' soft key 317, such that step S213 is performed. If the user determines to reset the icon arrangement, he/she can tap a 'reset' soft key 316, such that step S201 is performed.

In step S213, the current display with the icons arranged along the arrangement line is displayed as a graphical user interface for the electronic device. For example, in Fig. 3F, the display screen 30, showing functional icons 361-367 arranged along the arrangement line 351, is displayed as a graphical user interface.

The number or types of the functional icons can be set by a user in advance. For example, in this embodiment, 4 functional icons are arranged on the arrangement line 351, wherein the functional icons 361-367 are an icon for making phone calls, an icon for receiving/transmitting messages, an icon for receiving/transmitting mails, and an icon for playing music. The described number or types of the icons are used as an example, and the present invention is not limited thereto. The number or types of the icons can be determined to meet specific requirements.

In addition, when distributing the functional icons along the arrangement line 351 on the display screen 30, various modes can be utilized. For example, functional icons can be distributed starting from the middle of the arrangement line towards the end of the arrangement line when arranging the icons along the arrangement line on the display screen.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A method of controlling an electronic device with a touch panel, comprising:
displaying a first block and a second block on a display screen of the touch panel, wherein the first block is located on a lower portion on the display screen of the touch panel, and the second block is located on an upper portion on the display screen of the touch panel;
detecting and receiving a contact movement between the first block and the second block on the display screen of the touch panel;
determining an arrangement line for arranging icons on the display screen according to a continuous moving path corresponding to the contact movement on the touch panel; and
arranging a plurality of icons along the arrangement line on the display screen, and presenting the display screen with the icons arranged along the arrangement line as a graphical user interface for the electronic device.

2. The method of claim 1, further comprising:
displaying the second block as two sub-blocks on an upper-left corner and an upper-right corner of the display screen, respectively.

3. The method of claim 1, further comprising:
receiving a user command indicating the number or types of the icons.

4. The method of claim 1, further comprising:
displaying the icons starting from the middle of the arrangement line towards the end of the arrangement line when arranging the icons along the arrangement line on the display screen.

5. The method of claim 1, further comprising:
providing a plurality of curves as candidates of the arrangement line; and
selecting one of the plurality of curves as the arrangement line according to the moving path of the contact movement.

6. The method of claim 1, further comprising:
performing an algorithm for the moving path to determine the arrangement line on the display screen.

7. The method of claim 1, further comprising:
detecting the contact movement from the first block to the second block.

8. An electronic device, comprising:
a touch panel, arranged for displaying a first block and a second block on the display screen, wherein the first block is located on a lower portion on the display screen of the touch panel, and the second block is located on an upper portion on the display screen of the touch panel; and
a controller, arranged for detecting and receiving a contact movement between the first block and the second block on the display screen of the touch panel, determining an arrangement line for arranging icons on the display screen according to a moving path corresponding to the contact movement on the touch panel, arranging a plurality of icons along the arrangement line on the display screen, and using the display screen with the icons arranged along the arrangement line as a graphical user interface for the electronic device.

9. The electronic device of claim 8, wherein the touch panel displays the second block as two sub-blocks on an upper-left corner and an upper-right corner of the display screen, respectively.

10. The electronic device of claim 8, wherein the controller receives a user command indicating the number or types of the icons.

11. The electronic device of claim 8, wherein the controller further distributes the icons starting from the middle of the arrangement line towards the end of the arrangement line when arranging the icons along the arrangement line on the display screen.

12. The electronic device of claim 8, wherein the controller provides a plurality of curves as candidates of the arrangement line, and selects, from the plurality of curves, one curve as the arrangement line according to the moving path of the contact movement.

13. The electronic device of claim 8, wherein the controller further performs an algorithm for the moving path to determine the arrangement line on the display screen.

14. The electronic device of claim 8, wherein the controller further detects the contact movement from the first block to the second block.
